(19)

Europäisches
Patentamt
European
Patent Office
Office européen
des brevets

(11)     **EP 1 986 503 B1**

(12)                    **EUROPEAN PATENT SPECIFICATION**

(45) Date of publication and mention
of the grant of the patent:
**17.12.2014   Bulletin 2014/51**

(21) Application number: **07703902.2**

(22) Date of filing: **16.01.2007**

(51) Int Cl.:
***A23D 7/005*** (2006.01)

(86) International application number:
**PCT/EP2007/050387**

(87) International publication number:
**WO 2007/096211 (30.08.2007 Gazette 2007/35)**

(54) **NON DAIRY PRODUCT**

MILCHFREIES PRODUKT

PRODUIT NON-LAITIER

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **21.02.2006   EP 06075378**

(43) Date of publication of application:
**05.11.2008   Bulletin 2008/45**

(73) Proprietors:
• **Unilever N.V.**
**3013 AL Rotterdam (NL)**
Designated Contracting States:
**AT BE BG CH CZ DE DK EE ES FI FR GR HU IS IT
LI LT LU LV MC NL PL PT RO SE SI SK TR**
• **Unilever PLC**
**London**
**EC4Y 0DY (GB)**
Designated Contracting States:
**CY GB IE**

(72) Inventors:
• **BOT, Arjen**
**NL-3133 AT Vlaardingen (NL)**
• **VAN KEMPEN, Gijsbert, Michiel, Peter**
**NL-3133 AT Vlaardingen (NL)**
• **AVRAMIS, Constantina, Avramopoulou**
**NL-3133 AT Vlaardingen (NL)**

(74) Representative: **Brooijmans, Rob Josephina
Wilhelmus**
**Unilever Patent Group**
**Olivier van Noortlaan 120**
**3133 AT Vlaardingen (NL)**

(56) References cited:
**EP-A- 1 360 905      WO-A-96/39855**
**WO-A-03/043430      US-A1- 2005 136 171**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

Our invention concerns non-dairy water-continuous products with a hardness which makes them suitable for application as spreadable and/or spoonable cream alternatives and in particular as cream cheese alternatives

Non-dairy products, like creams and spreads are dairy like water-continuous products wherein at least part of the dairy fat and/or protein is replaced by vegetable proteins or fat. These products include, milk, cream, creme fraiche, sour cream, whipping cream, spread, cheese etc.

In general, liquid oils like vegetables oils and also marine oils are regarded as being more healthy than dairy fat like milk fat and butter fat as the unsaturated fatty acid content in vegetable oils are higher than in dairy fat. Furthermore, especially natural vegetable oils that have not undergone hydrogenation have a lower trans unsaturated fatty acid content than dairy fats.

Non-diary products like creams are known from a great number of publications such as e.g. the following references: EP 540085 and EP 540087 from which soured spoonable cream alternatives are known based on fat mixtures of liquid oil and hardened lauric fats, while also some butterfat can be present, WO 03/043430 from which spreadable cream alternatives are known that display a Stevens hardness of 100 to 500 grams.

However often these products contain still some amounts of diary fat like butterfat or milk fat. Products with some dairy fat often have a better mouthfeel than products with 100% vegetable fat due to the good melting behaviour of butterfat and milkfat. Upon temperature cycling, instability problems like syneresis are associated, i.e. water exudation, and less firmness are encountered in 100% vegetable fat non-dairy products.

Gelatin is often added to control the mouthfeel and syneresis. We found that compositions without the gelatin display less acceptable oral mouthfeel. However the addition of gelatin to non-dairy products also has a number of draw backs such as the cream is no longer kosher and creams wherein gelatin is present are less accepted nowadays by the consumer, e.g. due to concerns on using bone marrow in relation to mad cows disease. Furthermore products with gelatin are not suitable for vegetarians.

It is known that in fat-continuous products the use of tropical oils like palm oil lead to so-called tropical graininess. Tropical graininess can be described as a sandy mouthfeel due to crystals formed in the fat-phase by POP and/or PPO triglycerides. PPO and POP triglycerides are triglycerides with two palmitic acid residues and one oleic acid residue wherein the palmitic residue is present on the 1- and 3- position (POP) or on the 1- and 2- position (PPO).

WO96/39855 describes a spread with a fat phase with no tropical graininess. The spread is fat-continuous. Different ratios of POP to PPO is given, with many above 2.5.

In water-continuous products also graininess is experienced, however this graininess is different from the tropical graininess as experienced in fat continuous products due to the crystalisation behaviour of the tropical oils. Graininess associated with water continuous products such as in EP1360905 arise from proteins and the grains are therefore much larger than the grains observed from crystals of tropical oil.

It is therefore an object of the invention to provide a non-dairy product wherein the fat is 100% vegetable. A further object of the invention is to provide a non-dairy product that does not contain gelatin. Another object of the invention is to provide a stable product that is less prone to syneresis. Yet another object of the invention is to provide a product that has a pleasant mouthfeel. Yet another object of the invention is to provide a non-dairy product that does not suffer from tropical graininess.

One or more of the objects are attained by a water-continuous product which contains less than 1 wt% gelatin, comprising 10 to 50 wt% of fat, having pH of between 3 and 5.4 wherein at least 90 wt% of the fat is a vegetable fat and/or marine fat and wherein a combined amount of PPO + POP of at least 0.5 wt% is present and wherein a ratio of POP/PPO is less than 2.5.

Detailed description of the invention

The products according to the invention are water continuous, meaning the fat is dispersed in a continuous water phase. The products according to the invention are non dairy products are water-continuous products wherein at least part of the fat and/or protein is from a vegetable and/or marine source. The non-dairy product according to the invention is essentially gelatin free meaning that no gelatin is added during the process of making the non-diary product. Preferably no gelatin is present in the non-diary product. Preferred products contain less than 1 wt% of gelatin on total product, more preferably less than 0.5 wt% or even less than 0.1 wt%, or even 0.

The product of the present invention have a pH of between 3 to 5.4 preferably between 4.2 to 5.2, more preferably between 4.5 and 5.0, and most preferably between 4.3 and 4.7. Acidification to this pH can be obtained by any suitable method such as microbial acidification or chemical acidification for example using glucono deltalactone, citric acid, lactic acid or another acidifying agent. The pH can be further adjusted by the use of a base such as sodium hydroxide. Preferably the pH is attained by acidification of the starting ingredients.

The fat of the non-diary product is a fat that is at least 90 wt% vegetable fat and/or marine oil. Preferably 100 wt% of the fat is vegetable.

The fat according to the invention has a combined amount of PPO + POP triglycerides of at least 0.5 wt% and a ratio of POP/PPO of less than 2.5. PPO and POP triglycerides are triglycerides with two palmitic acid residues and one oleic acid residue wherein the palmitic residue is present on the 1- and 3-position (POP) or on the 1- and 2- position (PPO). The weight percentage is on fat phase.

In preferred non-dairy products according to the invention the combined amount of PPO and POP is at least 1.0 wt% and more preferably at least 2.0 wt%

In a preferred embodiment of the present invention the ratio of POP/PPO is less than 2, more preferably less than 1.5 and most preferably less than 1.

Suitably the fat comprises a hardstock fat. A hardstock fat is a fat which is solid at room temperature and provides structure. Suitable hardstock fats are palm oil, palm kernel fat, coconut fat, babassu fat, shea fat and combinations and fractions thereof. These fats may have been subjected to randomisation. However enzymatic rearrangement is highly preferred. To preserve their naturalness the fats have preferably not been subjected to modification such as chemical interesterification, wet fractionation and hydrogenation.

In addition to the hardstock fat, the fat of the present invention may comprises another triglyceride fat. This triglyceride fat is preferably chosen from the group comprising palm oil, olive oil, sunflower oil, soy bean oil, rapeseed oil, safflower, linseed, flaxseed, marine or a combination thereof. Most preferred the oil is high in polyunsaturated fatty acid level because of the positive effect this may have on cholesterol level in blood. Examples of such oils are sunflower oil, rapeseed oil, linseed oil, fish oil, algae oil, and safflower oil. Fully or partially hardened versions and fractions of these fats are also very suitable. The amount of butterfat does not exceed 10 wt% on total fat. The product according to the invention may include functional ingredients like sterols or sterols esters, stanols or stanol esters. Preferably the sterol and/or stanol esters are fatty acid esters.

In a preferred embodiment the product according to the invention further comprises a thickener selected from the group comprising guar gum, locust bean gum, carrageenan, alginate, pectin, tara gum, xanthan gum, starches, methylcellulose, carboxymethylcellulose or a combination thereof. Preferably the level of thickener is from 0.01 to 3 wt%, preferably from 0.2 to 2.5 wt%.

The amount of protein in the non-dairy product is from 0.5 to 15 wt%. To prevent the product from imparting a thick, proteinaceous mouthfeel such as given by fresh cheese, the amount of protein is preferably below 12 wt%. More preferred the amount of protein is from 1 to 6 wt%, more preferred from 2 to 5 wt%, even more preferred from 2 to 4 wt%.

Preferably the non-dairy cream comprises protein derived from buttermilk and/or protein derived from skim milk: The buttermilk and skim milk from which the protein is derived may be in any suitable physical form such as liquid, paste or powder. In view of process efficiency and supply chain simplicity, the protein is preferably added in the form of butter milk powder or skim milk powder or whey protein concentrate or a combination thereof.

Optionally the composition comprises an emulsifier. The emulsifier can be one single emulsifier or a combination of several. Preferably the emulsifier is selected from the group comprising monoglycerides, diglycerides, phospholipids, lecithins, polyglycerol esters, diacetyl tartaric acid esters of monoglycerides, polyoxy sorbitan esters, citric acid esters or a combination thereof. The preferred amount of emulsifier is from 0.001 to 2 wt%, more preferred from 0.01 to 1 wt%.

The product optionally comprises further ingredients such as colouring agents, flavour (concentrates), salt, sweetener, e.g. sugar, particulates e.g. herbs or a combination thereof.

Preferred products according to the invention are spreadable products. Spreadable means that an even layer of the product can be applied to a piece of bread without tearing the bread.

Products preferably have a firmness of between 50 and 250g, preferably between 100-150g.

Examples

Experimental:

Firmness

The firmness of the products is determined by measuring the force required to penetrate a cylindrical probe in the product. The peak force (by custom expressed in gram, g; 1 g = 9.81 mN) is recorded, and averaged over triplicate measurements.

Sample height 5 cm; cylindrical probe of 0.5 inch thickness; compression rate 2 mm/s; penetration depth 20 mm. A suitable machine may be a Stable Micro Systems TA-XT2 Texture Analyzer.

Droplet size $d_{3,2}$ value measurements

O/w emulsions were filled to a height of 15 mm in NMR tubes of 10 mm diameter, and thermally equilibrated for 30 min at 20 °C. A restricted diffusion-based droplet size was obtained by means of pfg-NMR using a Bruker Minispec MQ20. The details of the technique are discussed by Goudappel et al (Journal of Colloid and Interface Science 239, (2001) 535-542). A measurement yields values for the volume weighted geometric mean diameter $d_{3,3}$ and the width of the droplet size distribution when plotted as a function of the logarithm of the diameter $\sigma$. These parameters can be converted to the surface weighted mean diameter $d_{3,2}$ using the relation $d_{3,2}=d_{3,3}\cdot\exp(-\sigma^2/2)$. Measurements were carried out in triplicate and results are expressed in terms of average $d_{3,2}$ values. Definitions of droplet sizes are given by Alderliesten (Particle and Particle Systems Characterization 7 (1990) 233-241, and ibid 8 (1991) 237-241).

Syneresis measurements

The forced syneresis is the whey expelled from the product after temperature elevation for a defined time. Measure weight of the tub with product (B1).

Decant the exuded water on the surface and measure the weight (W1) of the exuded water.

Cut product in two and take out half of the product. Seal tub again and store for 2 hours at 25°C. Measure weight of the open tub with product and exuded water (B2). Decant the exuded water and measure the weight (W2) of the exuded water. Seal tub again and store for another 2 hours at 25°C. Measure weight of open tub with product and exuded water (B3). Decant the exuded water and measure the weight (W3) of the exuded water. Measure weight empty tub (C).

Calculate syneresis before use:

$$W1*100 / (B1 - C)$$

Calculate syneresis after 2 hours:

$$W2*100 / (B2 - C)$$

Calculate syneresis from 2 to 4 hours:

$$W3*100 / (B3 - C)$$

Calculate total syneresis after 4 hours:

$$(W2+W3)*100 / (B2 - C)$$

Comparative Example A:

An oil in water emulsion not according to the invention was prepared using the fat blends of Table 1 for preparing an emulsion according to Table 2.

TABLE 1

| wt.% | Fat blend 1 | Fat blend 2 | Fat blend 3 | Fat blend 4 | Fat blend 5 |
|---|---|---|---|---|---|
| Palm oil | 50 | | | | |
| Palm olein with IV 55 | | | 50 | | 15 |
| Palm olein with IV 47 | | 50 | | | |
| Fully hydrogenated coconut oil | 50 | 50 | | 50 | 50 |
| Rapeseed oil | | | | | 35 |
| Interesterification A | | | 50 | | |
| Palm stearin with melting point of 53°C | | | | 50 | |

Interesterification A is an interesterification of palm oil and palm kernel oil, and rapeseed oil

TABLE 2: Composition of the emulsion

| Ingredient | wt % on product |
|---|---|
| Fat | 22.0 |
| Skimmed milk powder | 6.25 |
| Whey protein concentrate (75% protein) | 1.75 |
| Locust Bean Gum (LBG) | 0.3 |
| Salt | 0.3 |
| Potassium sorbate | 0.1 |
| Citric acid (50% solution) | 0.6 |
| Demineralised water | Up to 100% |

Example 1: Oil in water emulsion according to the invention

An oil in water emulsion according to the invention was prepared using the fat blend of Table 3 for preparing an emulsion according to Table 2.

TABLE 3

| wt.% | Fat blend 6 | Fat blend 7 | Fat blend 8 | Fat blend 9 | Fat blend 10 |
|---|---|---|---|---|---|
| Interesterification B | 40 | | | | |
| Interesterification C | | 62 | | | |
| Rapeseed oil | 60 | 38 | 60 | 50 | |
| Interesterification A | | | 20 | | |
| Interesterification D | | | 20 | | |
| Interesterification E | | | | 50 | |
| Interesterification F | | | | 40 | 40 |
| Sunflower oil | | | | | 60 |

Interesterification B is an interesterification of dry fractionated palm oil stearin with melting point 53 and palm kernel oil, and rapeseed oil
Interesterification C is an interesterification of palm oil, fully hydrogenated palm oil, palm kernel oil, and rapeseed oil
Interesterification D is an interesterification of dry fractionated palm oil stearin with melting point 53 and palm kernel-oil, and rapeseed oil
Interesterification E: is an interesterification of palm oil with palm kernel oil
Interesterification F: Interesterification of dry fractionated palm oil stearin with melting point 53 and rapeseed oil

Example 2: Performance of products:

Products were subjected to intensive cycling regime. One week after production, products were placed in a 25°C temperature cabinet for 4h. Samples were then placed at 5°C cabinet for an additional 20h. This cycle was repeated twice, and subsequent measurements (firmness, syneresis, and droplet size) were taken.
As can be seen in table 4, the products according to the invention (fat blend 6-10) have better stability than the comparative products. They have less syneresis and smaller droplets size while having a good firmness. Fat blend 4 has also small syneresis and droplet size, however the firmness is too hard

TABLE 4: Performance of products with specified fat blends

| | Fat Blend 1 | Fat Blend 2 | Fat Blend 3 | Fat Blend 4 | Fat Blend 5 | Fat Blend 6 | Fat Blend 7 | Fat Blend 8 | Fat Blend 9 | Fat Blend 10 |
|---|---|---|---|---|---|---|---|---|---|---|
| POP/PPO | 4.53 | 4.18 | 2.75 | 3.61 | 5.27 | 0.56 | 0.54 | 0.55 | 0.52 | 0.52 |
| POP+PPO | 13.50% | 17.600 | 16.10% | 11.80% | 3.92% | 3.63% | 3.36% | 3.90% | 9.40% | 10.10 |
| | | | | | | | | | | |
| Product Properties | | | | | | | | | | |
| Firmness | 215 | 176.5 | 106.5 | 255.5 | 131 | 136.5 | 138.5 | 113 | 133.5 | 107.5 |
| Firmness Change | 180 | 206 | 95.5 | 229 | 100.5 | 12 | 20 | 9 | 26 | 14 |
| Syneresis | 8.71 | 13.91 | 17.15 | 8.63 | 6.18 | 2.14 | 6.78 | 7.45 | 8.14 | 7.4 |
| Syneresis Change | 12.41 | 17.61 | 12.3 | 8.88 | 14.81 | 7.44 | 11.83 | 7.37 | 7.2 | 7.61 |
| Droplet Size | 1.43 | 1.27 | 2.44 | 1.22 | 1.5 | 1.04 | 1.39 | 1.4 | 1.1 | 1.2 |
| Droplet Size Change | 0.7 | 0.83 | 0.64 | 0.797 | 1.03 | 0.1 | 0.35 | 0.1 | 0.1 | 0.1 |

**Claims**

1. Water-continuous product which contains less than 1 wt% of gelatin, comprising 10 to 50 wt% of fat, having a pH of between 3 and 5.4 wherein at least 90 wt% of the fat is a vegetable fat and/or marine fat and wherein a combined amount of PPO + POP of at least 0.5 wt% is present and wherein a ratio of POP/PPO is less than 2.5.

2. Water-continuous product according to claim 1 wherein the amount of POP + PPO is at least 1.0 wt% and most preferably at least 2.0 wt%.

3. Water-continuous product according to claim 1 or 2 wherein the combined with a POP/PPO ratio of less than 2, preferably less than 1.5 and most preferably less than 1.

4. Water-continuous product according to any of the claims 1 to 3 comprising functional ingredients selected from the group consisting of phytosterols, phytosterols esters, stanols, and stanol esters.

**Patentansprüche**

1. Produkt mit Wasser als kontinuierlicher Phase,
   das weniger als 1 Gew.-% Gelatine enthält, 10 bis 15 Gew.-% Fett aufweist, einen pH-Wert von 3 bis 5,4 hat, wobei mindestens 90 Gew.-% des Fettes ein Pflanzenfett und/oder Fett von Meereslebewesen sind, und wobei eine Summe der Menge an PPO + POP von mindestens 0,5 Gew.-% vorliegt und wobei das Verhältnis POP/PPO weniger als 2,5 beträgt.

2. Produkt mit Wasser als kontinuierlicher Phase nach Anspruch 1,
   wobei die Menge an POP + PPO mindestens 1,0 Gew.-% und besonders bevorzugt mindestens 2,0 Gew.-% beträgt.

3. Produkt mit Wasser als kontinuierlicher Phase nach Anspruch 1 oder 2,
   wobei das POP/PPO-Verhältnis weniger als 2, vorzugsweise weniger als 1,5 und besonders bevorzugt weniger als 1 beträgt.

4. Produkt mit Wasser als kontinuierlicher Phase nach einem der Ansprüche 1 bis 3,
   das funktionelle Bestandteile aufweist, die aus der Gruppe ausgewählt sind, die aus Phytosterolen, Phytosterolestern, Stanolen und Stanolestern besteht.

**Revendications**

1. Produit à phase aqueuse continue qui contient moins de 1 % en poids de gélatine, comprenant 10 à 50 % en poids de graisse, ayant un pH entre 3 et 5,4 où au moins 90 % en poids de la graisse est une graisse végétale et/ou une graisse marine et où une quantité combinée de PPO + POP d'au moins 0,5 % en poids est présente et où un rapport de POP/PPO est inférieur à 2,5.

2. Produit à phase aqueuse continue selon la revendication 1 où la quantité de POP + PPO est au moins 1,0 % en poids et de manière particulièrement préférable au moins 2,0 % en poids.

3. Produit à phase aqueuse continue selon la revendication 1 ou 2 où le combiné avec un rapport POP/PPO inférieur à 2, de préférence inférieur à 1,5 et de manière particulièrement préférable inférieur à 1.

4. Produit à phase aqueuse continue selon l'une quelconque des revendications 1 à 3 comprenant des ingrédients fonctionnels choisis dans le groupe consistant en les phytostérols, les esters de phytostérols, les stanols et les esters de stanols.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 540085 A
- EP 540087 A
- WO 03043430 A
- WO 9639855 A
- EP 1360905 A

**Non-patent literature cited in the description**

- **GOUDAPPEL et al.** *Journal of Colloid and Interface Science,* 2001, vol. 239, 535-542
- **ALDERLIESTEN.** *Particle and Particle Systems Characterization,* 1990, vol. 7, 233-241
- *PRATICLE AND PRATICLE SYSTEMS CHARACTERIZATION,* 1991, vol. 8, 237-241